# EUROPÄISCHE PATENTSCHRIFT

(11) **EP 2 895 518 B1**
(45) Veröffentlichungstag und Bekanntmachung des Hinweises auf die Patenterteilung: **16.11.2016**
(21) Anmeldenummer: 13758866.1
(22) Anmeldetag: 05.09.2013
(51) Int. Cl.: C08G 18/64, C09J 175/04, C08G 18/66, C08G 18/76, C08G 18/32, C08G 18/42

(54) **ZWEIKOMPONENTIGE POLYURETHANZUSAMMENSETZUNGEN, INSBESONDERE GEEIGNET FÜR DEN EINSATZ ALS ZÄHELASTISCHE, STRUKTURELLE KLEBSTOFFE ODER ALS VERGUSSMASSEN**
DUAL COMPONENT POLYURETHANE COMPOUNDS, PARTICULARLY SUITABLE FOR USE AS TOUGH ELASTIC STRUCTURAL ADHESIVES OR SEALING COMPOUNDS
COMPOSITIONS DE POLYURÉTHANE À DEUX COMPOSANTS, NOTAMMENT APPROPRIÉES À L'UTILISATION COMME COLLES STRUCTURELLES VISCOPLASTIQUES OU MASSES DE REMPLISSAGE

(30) Priorität: 14.09.2012 EP 12184557
(43) Veröffentlichungstag der Anmeldung: 22.07.2015
(73) Patentinhaber: Sika Technology AG, 6340 Baar (CH)
(72) Erfinder: KELCH, Steffen, CH-8102 Oberengstringen (CH); DÜRNAY, Wolfgang, 72574 Bad Urach (DE)
(74) Vertreter: Sika Patent Attorneys
(86) Internationale Anmeldenummer: PCT/EP2013/068384
(87) Internationale Veröffentlichungsnummer: WO 2014/040909

(56) Entgegenhaltungen:
- EP-A1- 2 469 075
- WO-A1-02/066572
- DE-A1-102008 026 266

## Beschreibung

### Technisches Gebiet

Die Erfindung betrifft das Gebiet der zweikomponentigen Polyurethanzusammensetzungen, insbesondere der zäh-elastischen strukturellen Zweikomponenten-Polyurethanklebstoffe oder der Vergussmassen.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen schnell aushärten und deshalb bereits nach kurzer Zeit schnell höhere Kräfte aufnehmen und übertragen können.

EP 2 469 075 A1 beschreibt zweikomponentige Zusammensetzungen zur Herstellung von Polyurethanklebstoffen, die sich unter anderem durch eine hohe Elasitzität auszeichnen. Als Polyisocyanat dient ein aromatisches Polyisocyanat wie beispielsweise MDI. Die Polyolkomponente enthält neben reinem Rizinusöl ein Polyether- oder Polyesterpolyol auf Basis von Rizinusöl oder Sojabohnenöl mit einer OH-Zahl von 150 bis 200 mg KOH/g, beispielsweise ein mit Rizinusöl modifiziertes Ketonharz wie Sovermol 805, sowie gegebenenfalls weitere Polyole.

WO 02/066572 A1 beschreibt einen Zweikomponenten-Klebstoff, dessen Polyolkomponente Rizinusöl, ein Keton-Formaldehydharz und Voranol RA 640 enthält, ein tetrafunktioneller Polyetherpolyol auf Basis von Ethylendiamin. Als Polyisocyanat kommt MDI zum Einsatz. Der Klebstoff zeichnet sich durch seine elastischen Eigenschaften, insbesondere durch seine hohen Zugscherfestigkeiten aus.

In DE 10 2008 026266 A1 wird ein Zweikomponenten-Klebstoff beschrieben, dessen Polyolkomponente neben Rizinusöl ein trifunktionelles Polyetherpolyol auf Basis von Glycerin und Propylenoxid enthält. Als Polyisocyanat kommt MDI zum Einsatz. Neben einer vorteilhaften Topfzeit werden die elastischen Eigenschaften der Klebstoffe hervorgehoben.

Für den Einsatz als strukturelle Klebstoffe werden jedoch hohe Ansprüche in Bezug auf Festigkeit und Dehnbarkeit an solche Klebstoffe gestellt, da derartige Klebstoffe Elemente von Last tragenden Strukturen darstellen.

Es besteht insbesondere der Wunsch nach Klebstoffe, die hohe Festigkeiten im Sinne struktureller Verklebungen und trotzdem eine hohe Dehnbarkeit aufweisen.

### Darstellung der Erfindung

Aufgabe der vorliegenden Erfindung ist es daher, eine zweikomponentige Polyurethanzusammensetzung, insbesondere einen strukturellen zweikomponentigen Polyurethanklebstoff, zur Verfügung zu stellen, die bei hoher Festigkeit gleichzeitig über eine hohe Dehnung verfügt. Dies wird durch die zweikomponentige Polyurethanzusammensetzung gemäss Anspruch 1 ermöglicht.

Überraschenderweise wird mit der erfindungsgemässen zweikomponentigen Polyurethanzusammensetzung eine hohe Festigkeit des ausgehärteten Materials erreicht, ohne dabei die Elastizität einzubüssen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine zweikomponentige Polyurethanzusammensetzung bestehend aus einer Polyolkomponente **K1** und einer Polyisocyanatkomponente **K2;**
wobei die Polyolkomponente **K1**
mindestens ein Umsetzungsprodukt von Ricinusöl mit Ketonharzen
mit einer OH-Zahl von 110 bis 200 mg KOH/g **A1,** und
mindestens ein aliphatisches Triol **A2,** umfasst,
und wobei die Polyisocyanatkomponente **K2**
mindestens ein aromatisches Polyisocyanat **B1** umfasst,
wobei das Verhältnis der Gew.-% von **(A1/A2)** 4 - 50 beträgt und wobei das Verhältnis aller NCO-Gruppen der aromatischen Polyisocyanate **B1** : aller OH-Gruppen der Summe von **(A1+A2)** = 1,15 : 1 - 0.85 : 1 beträgt, wobei es sich bei dem aliphatischen Triol **A2** um:
- 1,2,3-Propantriol und/oder
- 1,1,1-Trimethylolpropan und/oder
- Polyetherpolyole basierend auf 1,1,1-Trimethylolpropan mit einem Molekulargewicht von 170-500 g/mol und einer OH-Zahl von 400-1100 mg KOH/g
handelt und wobei die Summe aller OH-Gruppen von **(A1+A2) ≥** 90 % der Summe aller OH-Gruppen der zweikomponentigen Polyurethanzusammensetzung beträgt.

Die vorliegende Polyolkomponente **K1** umfasst mindestens ein Umsetzungsprodukt von Ricinusöl mit Ketonharzen mit einer OH-Zahl von 110 bis 200 mg KOH/g **A1.**

Bevorzugt ist eine OH-Zahl von 155 bis 190 mg KOH/g. Weiterhin weist es vorzugsweise ein OH-Equivalentgewicht von 300 bis 400 g/eq auf.

Als solche Polyether- und/oder Polyesterpolyole sind vorzugsweise Umsetzungsprodukte von Ricinusöl mit Ketonharzen, bevorzugt solche von Ricinusöl mit Cyclohexanon, insbesondere solche, wie sie beispielsweise von Bayer unter der Bezeichnung Desmophen® 1150 und von Cognis unter der Bezeichung Sovermol® 805 vertrieben werden.

Unter dem Begriff "Ricinusöl" (auch Rizinusöl oder Kastoröl genannt) wird im vorliegenden Dokument insbesondere Ricinusöl verstanden wie es beschreiben ist in CD Römpp Chemie Lexikon, Version 1.0, Thieme Verlag.

Unter dem Begriff "Ketonharz" wird im vorliegenden Dokument insbesondere Ketonharz verstanden wie es beschreiben ist in CD Römpp Chemie Lexikon, Version 1.0, Thieme Verlag.

Die vorliegende Polyolkomponente **K1** umfasst mindestens ein aliphatisches Triol **A2,** wobei es sich bei dem aliphatischen Triol **A2** um:
- 1,2,3-Propantriol und/oder
- 1,1,1-Trimethylolpropan und/oder
- Polyetherpolyole basierend auf 1,1,1-Trimethylolpropan mit einem Molekulargewicht von 170-500 g/mol und einer OH-Zahl von 400-1100 mg KOH/g,
handelt.

Handelt es sich bei dem aliphatischen Triol **A2** um 1,2,3-Propantriol (auch Glycerin genannt), so ist dies dahingehend von Vorteil, dass dadurch gegenüber Polyetherpolyolen basierend auf Trimethylolpropan höhere Zugfestigkeitswerte erhalten werden.

Geeignete 1,2,3-Propantriole sind kommerziell erhältlich von der Firma ecoMotion GmbH, Deutschland.

Handelt es sich bei dem aliphatischen Triol **A2** um 1,1,1-Trimethylolpropan (auch Trimethylolpropan oder 2-(hydroxymethyl)-2-ethylpropan-1,3-diol genannt), so ist dies dahingehend von Vorteil, dass dadurch gegenüber 1,2,3-Propantriol und gegenüber Polyetherpolyolen basierend auf Trimethylolpropan höhere Zugfestigkeitswerte und E-modul-Werte (im Dehnungsbereich 0.5-5 %) erhalten werden

Geeignete 1,1,1-Trimethylolpropane sind beispielsweise auch kommerziell erhältlich von der Firma Perstorp.

Handelt es sich bei dem aliphatischen Triol **A2** um Polyetherpolyole basierend auf 1,1,1-Trimethylolpropan mit einem Molekulargewicht von 170-500 g/mol, insbesondere 175-400 g/mol, bevorzugt von 175-350 g/mol, und einer OH-Zahl von 400-1100 mg KOH/g, insbesondere 500-1000 mg KOH/g, bevorzugt 520-980 mg KOH/g, gemessen nach DIN 53 240), so ist dies dahingehend von Vorteil, dass dadurch gegenüber 1,2,3-Propantriol und 1,1,1-Trimethylolpropan mit kleiner werdendem **(A1/A2)-**Verhältnis immer höhere E-modul-Werte (im Dehnungsbereich 0.05-0.25 %) erhalten werden, insbesondere wenn das Verhältnis der Gew.-% von **(A1/A2)** 4-9 beträgt.

Vorzugsweise handelt es sich bei den Polyetherpolyolen basierend auf 1,1,1-Trimethylolpropan um alkoxyliertes 1,1,1-Trimethylolpropan, insbesondere ethoxyliertes oder propoxyliertes 1,1,1-Trimethylolpropan, am meisten bevorzugt um propoxyliertes 1,1,1-Trimethylolpropan.

Geeignete Polyetherpolyole basierend auf 1,1,1-Trimethylolpropan sind beispielsweise auch kommerziell erhältlich unter dem Handelsnamen Desmophen® 4011 T von Bayer Material Science, Deutschland oder unter dem Handelsnamen Lupranol® 3903 von BASF, Deutschland.

Die vorliegende Polyisocyanatkomponente **K2** umfasst mindestens ein aromatisches Polyisocyanat **B1.**

Geeignete aromatische Polyisocyanate **B1** sind insbesondere monomere Di- oder Triisocyanaten, sowie Oligomere, Polymere und Derivate von monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat. Bevorzugte aromatische monomere Di- oder Triisocyanate sind abgeleitet von MDI und/oder TDI.

Geeignete Oligomere, Polymere und Derivate der genannten monomeren Di- und Triisocyanate sind insbesondere abgeleitet von MDI und TDI. Davon insbesondere geeignet sind kommerziell erhältliche Typen, TDI-Oligomere wie Desmodur^{®} IL (von Bayer); weiterhin geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen darstellen, bekannt unter Handelsnamen wie Desmodur^{®} CD, Desmodur^{®} PF, Desmodur^{®} PC (alle von Bayer), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Bayer), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt sind als aromatische Polyisocyanate **B1** MDI und/oder TDI, welche ≥ 40 Gew.-% monomeres MDI und/oder monomeres TDI aufweisen, bezogen auf das Gesamtgewicht des MDI und/oder TDI.

Es ist weiter vorteilhaft, wenn die Summe der NCO-Gruppen, welche nicht von **B1** herrühren, ≤ 5 %, insbesondere ≤ 2 %, insbesondere bevorzugt ≤ 1 %, am meisten bevorzugt ≤ 0.5 %, beträgt, bezogen auf die Summe aller NCO -Gruppen der zweikomponentigen Polyurethanzusammensetzung.

Das Verhältnis der Gew.-% von **(A1/A2)** beträgt 4 - 50.

Beträgt das Verhältnis der Gew.-% von **(A1/A2)** < 4, so ist das dahingehend von Nachteil, dass dadurch die Bruchdehnungswerte so tief sind, dass die resultierenden Zusammensetzungen nicht als Klebstoffe oder Vergussmassen geeignet sind.

Beträgt das Verhältnis der Gew.-% von **(A1/A2)** > 50, so ist das dahingehend von Nachteil, dass dadurch das E-modul so tief ist, dass die resultierenden Zusammensetzungen nicht als Klebstoffe oder Vergussmassen geeignet sind.

Beträgt das Verhältnis der Gew.-% von **(A1/A2)** 35-4, insbesondere 20-4, insbesondere bevorzugt 14-4, so ist dies dahingehend von Vorteil, dass dadurch hohe Zugfestigkeitswerte erhalten werden.

Beträgt das Verhältnis der Gew.-% von **(A1/A2)** 50-20, insbesondere 50-35, so ist dies dahingehend von Vorteil, dass dadurch hohe Bruchdehnungswerte erhalten werden.

Beträgt das Verhältnis der Gew.-% von **(A1/A2)** 35-4, insbesondere 14-4, so ist dies dahingehend von Vorteil, dass dadurch hohe E-module (im Dehnungsbereich 0.05-0.25 %) erhalten werden.

Handelt es sich bei dem aliphatisches Triol A2 um 1,1,1-Trimethylolpropan und beträgt das Verhältnis der Gew.-% von **(A1/A2)** 35-4, insbesondere 20-4, insbesondere bevorzugt 14-4, so ist dies dahingehend von Vorteil, dass dadurch hohe Zugfestigkeitswerte erhalten werden.

Für denselben Vorteil hoher Zugfestigkeitswerte ist im Falle von:
- 1,2,3-Propantriol ein Verhältnis der Gew.-% von **(A1/A2)** 35-4 vorteilhaft,
- Polyetherpolyole basierend auf Trimethylolpropan ein Verhältnis der Gew.-% von **(A1/A2)** 14-4, insbesondere 10-4, vorteilhaft.

Handelt es sich bei dem aliphatisches Triol A2 um 1,1,1-Trimethylolpropan und beträgt das Verhältnis der Gew.-% von **(A1/A2)** 50-35, so ist dies dahingehend von Vorteil, dass dadurch hohe Bruchdehnungswerte erhalten werden.

Für denselben Vorteil hoher Bruchdehnungswerte ist im Falle von:
- 1,2,3-Propantriol ein Verhältnis der Gew.-% von **(A1/A2)** 50-35 vorteilhaft,
- Polyetherpolyole basierend auf Trimethylolpropan ein Verhältnis der Gew.-% von **(A1/A2)** 50-10, insbesondere 50-20, bevorzugt 50-30, vorteilhaft.

Handelt es sich bei dem aliphatisches Triol A2 um 1,1,1-Trimethylolpropan und beträgt das Verhältnis der Gew.-% von **(A1/A2)** 35-4, insbesondere 20-4, insbesondere bevorzugt 14-4, so ist dies dahingehend von Vorteil, dass dadurch hohe E-module (im Dehnungsbereich 0.5-5 %) erhalten werden.

Für denselben Vorteil hoher E-modul-werte ist im Falle von:
- 1,2,3-Propantriol ein Verhältnis der Gew.-% von **(A1/A2)** von 35-4, insbesondere 20-4, insbesondere bevorzugt 14-4, vorteilhaft.

Handelt es sich bei dem aliphatisches Triol A2 um 1,1,1-Trimethylolpropan und beträgt das Verhältnis der Gew.-% von **(A1/A2)** 35-4, insbesondere 20-4, so ist dies dahingehend von Vorteil, dass dadurch hohe E-module (im Dehnungsbereich 0.05-0.25 %) erhalten werden.

Für denselben Vorteil hoher E-modul-werte ist im Falle von:
- 1,2,3-Propantriol ein Verhältnis der Gew.-% von **(A1/A2)** von 35-4 vorteilhaft.
- Polyetherpolyole basierend auf Trimethylolpropan ein Verhältnis der Gew.-% von **(A1/A2)** von 35-4, insbesondere 20-4, vorzugsweise 15-4, insbesondere bevorzugt 10-4, vorteilhaft.

Das Verhältnis aller NCO-Gruppen der aromatischen Polyisocyanate **B1** : allen OH-Gruppen der Summe von **(A1+A2)** beträgt 1,15 : 1 - 0.85 : 1. Vorzugsweise beträgt das Verhältnis aller NCO-Gruppen der aromatischen Polyisocyanate **B1** : allen OH-Gruppen der Summe von **(A1+A2)** 1,1: 1 - 0.9 : 1. Unter dem vorgehend beschriebenen Verhältnis wird das molare Verhältnis erwähnter Gruppen verstanden.

Bei der zweikomponentigen Polyurethanzusammensetzung beträgt die Summe aller OH-Gruppen von **(A1+A2) ≥** 90 % der Summe aller OH-Gruppen der zweikomponentigen Polyurethanzusammensetzung.

Vorzugsweise beträgt bei der zweikomponentigen Polyurethanzusammensetzung die Summe aller OH-Gruppen von **(A1+A2) ≥** 95 %, insbesondere ≥ 98 %, insbesondere bevorzugt ≥ 99 %, am meisten bevorzugt ≥ 99,5 %, der Summe aller OH-Gruppen der zweikomponentigen Polyurethanzusammensetzung. Dies ist hohen Werten für die Zugfestigkeit und das E-modul zuträglich.

Vorzugsweise ist die zweikomponentige Polyurethanzusammensetzung im Wesentlichen frei von OH-Gruppen, welche nicht von **(A1+A2)** herrühren. Unter dem Begriff "im Wesentlichen frei" wird in diesem Fall verstanden, dass die Summe der OH-Gruppen, welche nicht von **(A1+A2)** herrühren, ≤5 %, insbesondere ≤2 %, insbesondere bevorzugt ≤1 %, am meisten bevorzugt ≤0.5 %, beträgt, bezogen auf die Summe aller OH-Gruppen der zweikomponentigen Polyurethanzusammensetzung. Dies ist hohen Werten für die Zugfestigkeit und das E-modul zuträglich.

Vorzugsweise ist die zweikomponentige Polyurethanzusammensetzung im Wesentlichen frei von OH-Gruppen der folgenden Stoffe:
- Polyether- und/oder Polyesterpolyole.
- Niedermolekularen Polyolen mit einem Molekulargewicht von 120 bis 3000 g/mol (ausgenommen 1,2,3-Propantriol), insbesondere; -Niedermolekularen aliphatische Triole mit einem Molekulargewicht von 120 bis 2000 g/mol (ausgenommen 1,2,3-Propantriol).

Es gibt unterschiedliche Arten von derartigen niedermolekularen aliphatischen Triolen. So können sie beispielsweise Urethan- und/oder Harnstoff- und/oder Ethergruppen enthalten. Die Gestalt der Triole kann sehr unterschiedlich sein. So sind beispielsweise sternförmige oder kammförmige Triole möglich. Es ist weiterhin möglich, dass im Triol sowohl primäre als auch sekundäre Hydroxylgruppen vorhanden sind. Beispielsweise lassen sich erwähnte niedermolekulare aliphatische Triole aus einem aliphatischen Triisocyanat, insbesondere aus einem Isocyanurat, welches aus drei Diisocyanat-Molekülen gebildet wird, im Überschuss von aliphatischen Diolen, insbesondere von Polyetherdiolen, gegebenenfalls durch weitere Nachverlängerung mittels aliphatischen Diisocyanaten und aliphatischen Diolen, erreichen. Weitere beispielhafte niedermolekulare aliphatischen Triole können aus niedermolekularen aliphatischen Triolen, wie zum Beispiel Trimethylolpropan oder Glycerin, und einem aliphatischen Diisocyanat und nachfolgender Reaktion mit einem aliphatischen Diol erhalten werden.Weiterhin beispielhafte niedermolekulare aliphatische Triole sind Produkte einer Alkoxylierungsreaktion von niedermolekularen aliphatischen Triolen, wie zum Beispiel Trimethylolpropan oder Glycerin. -niedermolekularen Diolen mit einem Molekulargewicht von 120 bis 2000 g/mol.
-niedermolekularen Polyolen mit 5 bis 8 Hydroxylgruppen mit einem Molekulargewicht von 120 bis 3000 g/mol. Typischerweise handelt es sich bei solchen Polyolen um Zuckeralkohole sowie auf Zuckeralkohol basierende Polyole, die eine entsprechende Anzahl von OH-Gruppen aufweisen, insbesondere Pentite oder Hexite oder solche auf Basis von Disacchariden. Es können auch die entsprechenden Zucker eingesetzt werden.

Vorzugsweise beträgt der Anteil der Summe von **A1** und **A2** ≥ 90 Gew.-%, insbesondere ≥ 95 Gew.-%, insbesondere bevorzugt ≥ 99 Gew.-%, bezogen auf das Gesamtgewicht der Polyolkomponente **K1.**

Vorzugsweise beträgt der Anteil des aromatischen Polyisocyanats **B1** ≥ 90 Gew.-%, insbesondere ≥ 95 Gew.-%, insbesondere bevorzugt ≥ 99 Gew.-%, bezogen auf das Gesamtgewicht der Polyisocyanatkomponente **K2.**

Die Komponenten **K1** und **K2** werden vorteilhaft derart formuliert, dass das Volumenverhältnis von Komponente **K1** und **K2** zwischen 1:3 und 3:1, insbesondere zwischen 1:2 und 2:1, beträgt. Besonders bevorzugt beträgt dieses Verhältnis in etwa 1:1.

Beide Komponenten **K1** und **K2** können neben den bereits erwähnten weitere Bestandteile, wie sie der Fachmann aus der -Polyurethanchemie her kennt, aufweisen. Diese können in nur einer Komponente oder in beiden vorhanden sein. Als derartige zusätzliche Bestandteile werden beispielsweise Lösungsmittel, Weichmacher und/oder Extender, Füllstoffe wie insbesondere Russ, Kreide, Talk, Baryth, Schichtsilikate, Haftvermittler wie insbesondere Trialkoxysilane, Thixotropiermittel wie amorphe Kieselsäuren, Trocknungsmittel wie Zeolithe und Farbpigmente eingesetzt.

Wie der Fachmann für Polyurethanklebstoffe weiss, muss bei der Herstellung der Komponenten, insbesondere bei der Polyisocyanatkomponente K2, darauf geachtet werden, dass deren Bestandteile möglichst frei von Wasser sind und die Komponenten unter Ausschluss von Feuchtigkeit gehandhabt werden.

Die Komponenten **K1** und **K2** werden vor der Anwendung getrennt voneinander gelagert und erst bei oder unmittelbar vor der Anwendung miteinander gemischt. Die Komponenten sind vorteilhaft in einer Verpackung, welche aus zwei voneinander getrennten Kammern besteht, vorhanden und zwar derart, dass die Polyolkomponente **K1** in der einen Kammer und die Polyisocyanatkomponente **K2** in der anderen Kammer vorhanden ist. Die Komponenten **K1** und **K2** werden in die Kammern der Verpackung eingefüllt und luft- und feuchtigkeitsdicht verschlossen.

In einem weiteren Aspekt umfasst die Erfindung eine Packung bestehend aus einer Verpackung mit zwei voneinander getrennten Kammern und einer zweikomponentigen Polyurethanzusammensetzung.

Bevorzugte derartige Packungen sind einerseits side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind.

Für Anwendungen in grösseren Mengen, insbesondere für Anwendungen in der industriellen Fertigung, werden die Komponenten **K1** und **K2** vorteilhaft in Fässer oder Hobbocks abgefüllt und gelagert. In diesem Falle werden die Komponenten über Förderpumpen über Leitungen einer Mischapparatur zudosiert, wie sie üblicherweise für Zweikomponentenklebstoffe in der industriellen Fertigung eingesetzt werden.

Bei jeglicher Packung ist es wichtig, dass zumindest die Polyisocyanatkomponente **K2** luft- und feuchtigkeitsdicht verschlossen ist, so dass beide Komponenten über lange Zeit, d.h. typischerweise länger als 6 Monate, lagerfähig sind.

Die beschriebene zweikomponentige Polyurethanzusammensetzung ist vorteilhaft verwendbar als Klebstoff oder Matrixharz für Faserverbundwerkstoff (Composite), Vergussmasse, Klebstoff, Belag, Beschichtung, Anstrich, Lack oder Versiegelung.

In einem weiteren Aspekt umfasst die Erfindung ein Verfahren zum Verkleben.

Das Verfahren der Verklebung umfasst die folgenden Schritte:
- Mischen der vorgängig beschriebenen Komponenten **K1** und **K2,**
- Applizieren der gemischten Polyurethanzusammensetzung auf mindestens eine der zu verklebenden Substratoberflächen,
- Fügen innerhalb der Offenzeit,
- Aushärten der Polyurethanzusammensetzung.

Das Mischen erfolgt typischerweise über Statikmischer oder mit Hilfe von dynamischen Mischern.

Die gemischte Polyurethanzusammensetzung wird auf mindestens einer der zu verklebenden Substratoberfläche appliziert. Das zu verklebende Substrat umfasst oder besteht vorzugsweise aus einem Material ausgewählt aus der Gruppe bestehend aus Metall, Kunststoff, Holz, Glas, Keramik und faserverstärkte Kunststoffe, insbesondere Metall und faserverstärkte Kunststoffe.

Typischerweise sind zwei Substrate vorhanden, welche verklebt werden sollen. Es ist möglich, dass der Fügepartner, d.h. das zweite Substrat identisch oder unterschiedlich vom ersten Substrat ist. Der Klebstoffauftrag kann auf dem ersten und/oder dem zweiten Fügepartner erfolgen. Nach dem Klebstoffauftrag werden die Fügepartner innerhalb der Offenzeit gefügt. Anschliessend an das Fügen erfolgt die Aushärtung der Polyurethanzusammensetzung.

Somit entsteht ein Verbund der Fügepartner, wobei der Klebstoff diese Fügepartner kraftschlüssig miteinander verbindet.

Aus dem vorgängig beschriebenen Verfahren resultiert ein verklebter Artikel, welcher insbesondere ein verklebter Artikel ist umfassend, als Substrate Metall, Kunststoff, Holz, Glas, Keramik und faserverstärkte Kunststoffe, insbesondere Metall und faserverstärkte Kunststoffe. Ein solcher Artikel ist ein weiterer Aspekt der Erfindung.

Die Polyurethanzusammensetzung wird vorzugsweise als struktureller Klebstoff eingesetzt. In einem weiteren Aspekt umfasst die Erfindung daher die Verwendung einer zweikomponentigen Polyurethanzusammensetzung als Klebstoff, insbesondere als struktureller Klebstoff.

Bevorzugt weist ein solcher struktureller Klebstoff im ausgehärteten Zustand bei Raumtemperatur eine Zugfestigkeit von ≥ 5 MPa, insbesondere von ≥ 6 MPa, auf. Bevorzugt weist ein struktureller Klebstoff im ausgehärteten Zustand bei Raumtemperatur eine Bruchdehnung von ≥ 30 %, insbesondere von ≥ 60 %, auf. Bevorzugt weist ein struktureller Klebstoff im ausgehärteten Zustand bei Raumtemperatur ein E-Modul von ≥ 10 MPa, auf. Dabei sind diese genannten mechanischen Werte gemessen wie in den nachfolgenden Beispielen beschrieben.

Typische Beispiele für Anwendungen der erfindungsgemässen Polyurethanzusammensetzungen finden sich im Automobilbau und im Leichtbau. Hierbei ist der ausgehärtete Klebstoff ein Teil einer tragenden Struktur und bildet somit ein wichtiges Bindeglied, an dessen mechanischen Eigenschaften hohe Ansprüche gestellt werden. Die vorliegende Erfindung erfüllt diese hohen Ansprüche bestens.

In einem weiteren Aspekt umfasst die Erfindung ein Verfahren zu einem kraftschlüssigen Verfüllen von Fugen und Spalten in einem Substrat umfassend die Schritte
a) Mischen der Polyolkomponente **K1** und der Polyisocyanatkomponente **K2** wie sie vorgehend beschreiben sind,
b) Applizieren der gemischten Polyurethanzusammensetzung in die zu überbrückende Fuge zwischen zwei Substraten oder in den zu verfüllenden Spalt auf der Oberfläche eines Substrates,
c) Aushärten der Polyurethanzusammensetzung in der Fuge oder im Spalt.

Aus dem vorgängig beschriebenen Verfahren resultiert ein verfüllter Artikel, welcher insbesondere ein verklebter Artikel ist umfassend, als Substrate Metall, Kunststoff, Holz, Glas, Keramik und faserverstärkte Kunststoffe, insbesondere Metall und faserverstärkte Kunststoffe. Ein solcher Artikel ist ein weiterer Aspekt der Erfindung. In einem weiteren Aspekt umfasst die Erfindung einen solchen verfüllten Artikel.

Die Polyurethanzusammensetzung wird vorzugsweise als Vergussmasse, insbesondere als Elektrovergussmasse, eingesetzt. In einem weiteren Aspekt umfasst die Erfindung daher die Verwendung einer zweikomponentigen Polyurethanzusammensetzung als Vergussmasse, insbesondere als Elektrovergussmasse.

Bevorzugt weist eine solche Vergussmasse im ausgehärteten Zustand bei Raumtemperatur eine Zugfestigkeit von ≥ 10 MPa auf. Bevorzugt weist eine solche Vergussmasse im ausgehärteten Zustand bei Raumtemperatur eine Bruchdehnung von ≥ 50 %, insbesondere von ≥ 80 %, auf. Bevorzugt weist eine solche Vergussmasse im ausgehärteten Zustand bei Raumtemperatur ein (Dehnungsbereich 0.05-0.25 %) von ≥ 100 MPa, auf. Dabei sind diese genannten mechanischen Werte gemessen wie in den nachfolgenden Beispielen beschrieben.

Typische Bespiele für Anwendungen der erfindungsgemässen Polyurethanzusammensetzungen finden sich im Gebiet der Elektrovergussmassen

### Beispiele

Die in Tabelle 1 beispielhaft angeführten Zusammensetzungen ***2** - **5*** und ***7- 14*** und ***16 - 19*** sind erfindungsgemässe Beispiele, während es sich bei den Beispielen ***1, 6*** und ***15*** um Referenzbeispiele handelt.

Zur Herstellung der Komponenten **K1** wurde die Komponente A1 und die Komponente A2-1, respektive A2-2, respektive A2-3, respektive A2-4, sowie 1 Gew.-% (bezogen auf das Gesamtgewicht der Komponente K1) eines Trocknungsmittels (PURMOL® molecular sieve, Zeochem AG, Schweiz), gemäss dem in der in Tabelle 2 angegebenen Verhältnis A1/A2 gravimetrisch eingewogen und in einem SpeedMixer® (DAC 150 FV, Hauschild) 30 Sekunden bei 3000 rpm gemischt.

Danach wurde die Komponenten **K2** (B1) gemäss Tabelle 2 gravimetrisch zu der Komponenten **K1** eingewogen und in dem SpeedMixer 30 Sekunden bei 3000 rpm gemischt. Die Komponenten **K1** und **K2** wurden im Gewichtsverhältnis von **K1 : K2** so vermischt, dass jeweils ein NCO / OH-Verhältnis von 1.07 resultierte. Danach wurde die gemischte Zusammensetzung zur Aushärtung in Teflonschalen mit einem Durchmesser von 20 cm gegossen und daraus Proben mit einer Dicke von 2 mm gewonnen.

In Tabelle 2 sind die eingesetzten (und in Tabelle 1 ausgeführten) Rohstoffe durch ein "X" markiert, diese wurden wie vorgehend beschrieben zu den Beispielen 1-19 vermischt. So wurde beispielsweise zur Herstellung von Beispiel 2 65.26 g Desmophen 1150, 1.36 g 1,2,3-Propantriol und 0.68 g Purmol Molekularsiebpulver miteinander vermischt (3 min Speedmixer bei 3000 U/min) und nach Vermischen mit 33.71 g MDI (Desmodur VKS 20 inklusive 1 Gew.-% einer 1 %-igen Lösung eines Katalysators basierend auf Bismut- und Zink-neodecanoat) (1 min Speedmixer bei 3000 U/min) zur Aushärtung gebracht.

### Messungen

Die gemischten Komponenten **K1** und **K2** wurden in Hantelform gemäss ISO 527, Teil 2, 1 B gebracht und während 24 h bei 25°C und anschliessend während 3h bei 80°C gehärtet.

Nach einer Konditionierungszeit von 24h bei 25°C wurden E-Modul 1 (Dehnungsbereich 0.5-5 %), E-Modul 2 (Dehnungsbereich 0.05-0.25 %), Zugfestigkeit (ZF) und Bruchdehnung (BD) der so hergestellten Probekörper gemäss ISO 527 auf einer Zwick Z020 Zugprüfmaschine bei einer Prüftemperatur von 23°C und einer Prüfgeschwindigkeit 200 mm/min gemessen. Die Ergebnisse finden sich in Tabelle 3.

| | |
|---|---|
| A1 | Umsetzungsprodukt von Rizinusöl mit Ketonharzen, Desmophen® 1150, Bayer Material Science, Deutschland |
| A2-1 | 1,2,3-Propantriol, ecoMotion GmbH, Deutschland , OH-Zahl von 1880 |
| A2-2 | 1,1,1-Trimethylolpropan (auch Trimethylolpropan oder 2-(hydroxymethyl)-2-ethylpropan-1,3-diol genannt), Perstorp |
| A2-3 | Desmophen® 4011 T, OH-Zahl von 550 ± 25 mg KOH/g, Molekulargewicht von ca., 300±20 g/mol, Bayer Material Science, Deutschland |
| A2-4 | Lupranol® 3903, OH-Zahl von 935 mg KOH/g, Molekulargewicht von ca. 180±10 g/mol, BASF, Deutschland |
| B1 | MDI (45 % monomeres MDI), 4,4'-, 2,4'-Diphenylmethandiisocyanat, Desmodur® VKS 20, Bayer Material Science, (inklusive 1 Gew.-% Katalysator*) |

Tabelle 1, eingesetzte Rohstoffe, * metallorganischer Katalysator basierend auf Bismut- und Zink-neodecanoat, 1%-ige Lösung.

**Tabelle 2, Zusammensetzungen**

| Bsp. | A1/A2 | A1 | A2-1 | A2-2 | A2-3 | A2-4 | B1 |
|---|---|---|---|---|---|---|---|
| 1 ^{*)} | - | X | | | | | X |
| 2 | 48.5 | X | X | | | | X |
| 3 | 23.75 | X | X | | | | X |
| 4 | 15.5 | X | X | | | | X |
| 5 | 11.38 | X | X | | | | X |
| 6 ^{*)} | - | X | | | | | X |
| 7 | 48.5 | X | XX | X | | | X |
| 8 | 23.75 | X | XX | X | | | X |
| 9 | 15.5 | X | | X | | | X |
| 10 | 11.38 | X | | X | | | X |
| 11 | 21 | X | | | X | | X |
| 12 | 10 | X | | | X | | X |
| 13 | 6.6 | X | | | X | XX | X |
| 14 | 4.8 | X | | | X | XX | X |
| 15 | 98 | X | | | | X | X |
| 16 | 32 | X | | | | X | X |
| 17 | 18.8 | X | | | | X | X |
| 18 | 11.4 | X | | | | X | X |
| 19 | 8.4 | X | | | | X | X |

| | | | | | | | |
|---|---|---|---|---|---|---|---|
| *) Vergleichsversuch | | | | | | | |

**Tabelle 3, Messung mechanische Eigenschaften**

| Bsp. | ZF [MPa] | BD [%] | E-modul 1 [MPa] | E-modul 2 [MPa] |
|---|---|---|---|---|
| | | | | |
| 1 ^{*)} | 17 | 95 | 116 | 182 |
| 2 | 22 | 47 | 398 | 700 |
| 3 | 33 | 12 | 642 | 679 |
| 4 | 31 | 5 | 662 | 684 |
| 5 | 36 | 5 | 717 | 693 |
| 6 ^{*)} | 16 | 98 | 81 | 135 |
| 7 | 19 | 60 | 310 | 404 |
| 8 | 31 | 15 | 595 | 538 |
| 9 | 35 | 6 | 717 | 610 |
| 10 | 39 | 5 | 800 | 594 |
| 11 | 15 | 54 | 210 | 255 |
| 12 | 19 | 68 | - | 588 |
| 13 | 23 | 34 | - | 976 |
| 14 | 27 | 15 | | 1082 |
| 15 | 16 | 80 | 169 | 166 |
| 16 | 19 | 69 | 314 | 342 |
| 17 | 22 | 34 | - | 972 |
| 18 | 27 | 28 | - | 1082 |
| 19 | 32 | 11 | - | 1303 |

| | | | | |
|---|---|---|---|---|
| *) Vergleichsversuch | | | | |

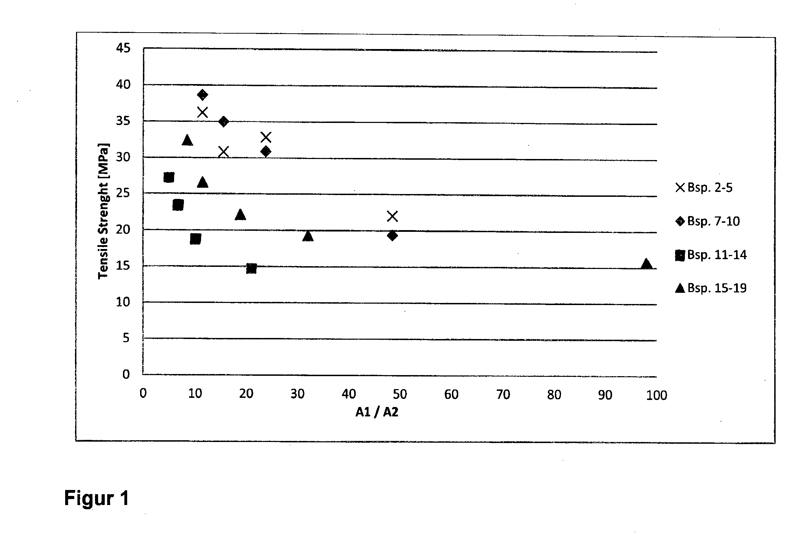

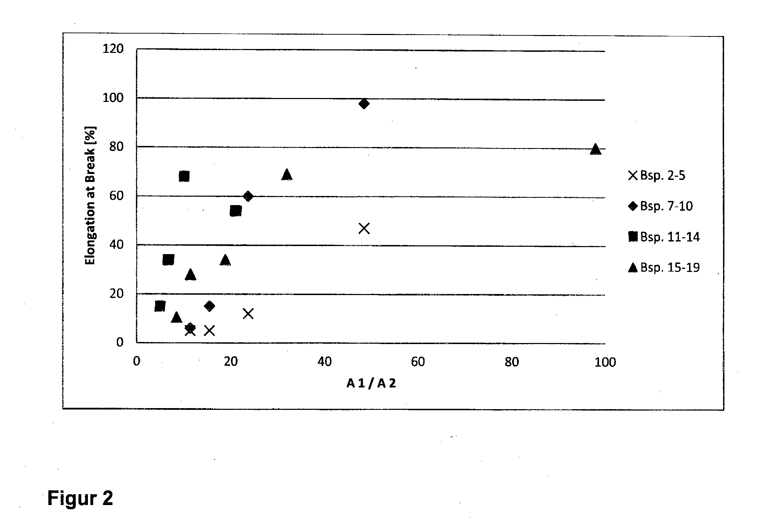

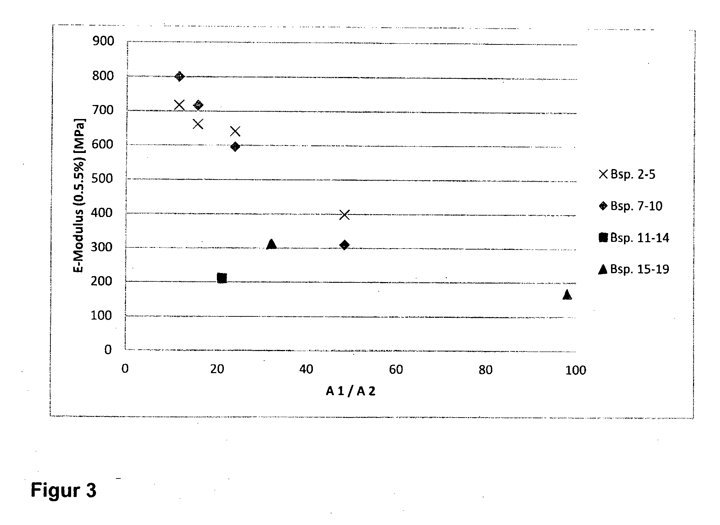

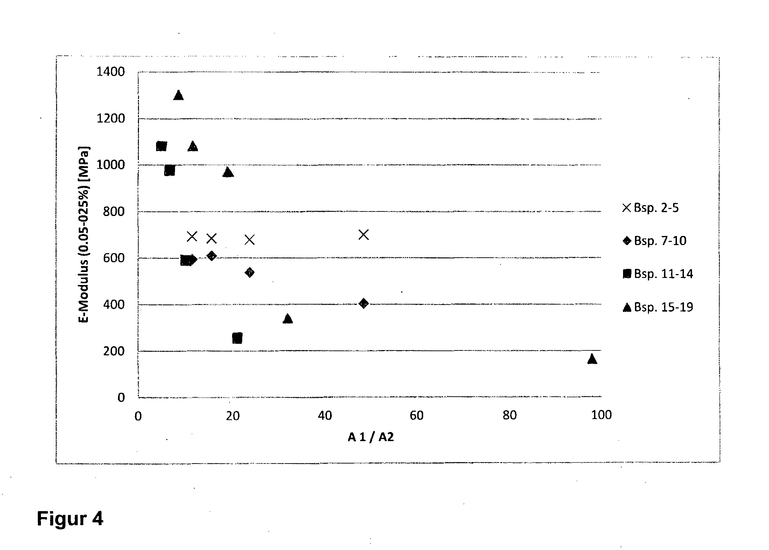

## Patentansprüche

1. Zweikomponentige Polyurethanzusammensetzung bestehend aus einer
Polyolkomponente **K1** und einer Polyisocyanatkomponente **K2;**
wobei die Polyolkomponente **K1**
mindestens ein Umsetzungsprodukt von Ricinusöl mit Ketonharzen
mit einer OH-Zahl von 110 bis 200 mg KOH/g **A1,** und
mindestens ein aliphatisches Triol **A2,** umfasst,
und wobei die Polyisocyanatkomponente **K2**
mindestens ein aromatisches Polyisocyanat **B1** umfasst,
wobei das Verhältnis der Gew.-% von **(A1/A2)** 4 - 50 beträgt und wobei das Verhältnis aller NCO-Gruppen der aromatischen Polyisocyanate **B1** :
aller OH-Gruppen der Summe von **(A1+A2)** = 1,15 : 1 - 0.85 : 1 beträgt, wobei es sich bei dem aliphatischen Triol **A2** um
- 1,2,3-Propantriol und/oder
- 1,1,1-Trimethylolpropan und/oder
- Polyetherpolyole basierend auf 1,1,1-Trimethylolpropan mit einem Molekulargewicht von 170-500 g/mol und einer OH-Zahl von 400-1100 mg KOH/g
handelt und wobei die Summe aller OH-Gruppen von **(A1+A2) ≥** 90 % der Summe aller OH-Gruppen der zweikomponentigen Polyurethanzusammensetzung beträgt.

2. Zweikomponentige Polyurethanzusammensetzung gemäss Anspruch 1, **dadurch gekennzeichnet, dass** es sich bei dem aliphatischen Triol **A2** um 1,2,3-Propantriol handelt.

3. Zweikomponentige Polyurethanzusammensetzung gemäss Anspruch 1, **dadurch gekennzeichnet, dass** es sich bei dem aliphatischen Triol **A2** um 1,1,1-Trimethylolpropan handelt.

4. Zweikomponentige Polyurethanzusammensetzung gemäss Anspruch 1, **dadurch gekennzeichnet, dass** es sich bei dem aliphatischen Triol **A2** um Polyetherpolyole basierend auf 1,1,1-Trimethylolpropan mit einem Molekulargewicht von 170-500 g/mol und einer OH-Zahl von 400-1100 mg KOH/g handelt.

5. Zweikomponentige Polyurethanzusammensetzung gemäss einem der vorgehenden Ansprüche, **dadurch gekennzeichnet, dass** das Verhältnis der Gew.-% von **(A1/A2)** 35-4, insbesondere 20-4, insbesondere bevorzugt 14-4, beträgt.

6. Zweikomponentige Polyurethanzusammensetzung gemäss einem der Ansprüche 1-4, **dadurch gekennzeichnet, dass** das Verhältnis der Gew.-% von **(A1/A2)** 50-20, insbesondere 50-35, beträgt.

7. Zweikomponentige Polyurethanzusammensetzung gemäss einem der vorgehenden Ansprüche, **dadurch gekennzeichnet, dass** es sich bei dem aromatischen Polyisocyanat **B1** um
- MDI, welche ≥ 40 Gew.-% monomeres MDI aufweisen; und/oder
- TDI, welche ≥ 40 Gew.-% monomeres TDI aufweisen,
bezogen auf das Gesamtgewicht des MDI und/oder TDI, handelt.

8. Zweikomponentige Polyurethanzusammensetzung gemäss einem der vorgehenden Ansprüche, **dadurch gekennzeichnet, dass** in der zweikomponentigen Polyurethanzusammensetzung die Summe der OH-Gruppen, welche nicht von **(A1+A2)** herrühren, ≤5 %, insbesondere ≤2 %, insbesondere bevorzugt ≤1 %, am meisten bevorzugt ≤0.5 %, beträgt, bezogen auf die Summe aller OH-Gruppen der zweikomponentigen Polyurethanzusammensetzung.

9. Zweikomponentige Polyurethanzusammensetzung gemäss einem der vorgehenden Ansprüche, **dadurch gekennzeichnet, dass** in der zweikomponentigen Polyurethanzusammensetzung die Summe der NCO-Gruppen, welche nicht von **B1** herrühren, ≤ 5 %, insbesondere ≤ 2 %, insbesondere bevorzugt ≤ 1 %, am meisten bevorzugt ≤ 0.5 %, beträgt, bezogen auf die Summe aller NCO -Gruppen der zweikomponentigen Polyurethanzusammensetzung.

10. Zweikomponentige Polyurethanzusammensetzung gemäss einem der vorgehenden Ansprüche, **dadurch gekennzeichnet, dass** der Anteil der Summe von **A1** und **A2** ≥ 90 Gew.-%, insbesondere ≥ 95 Gew.-%, insbesondere bevorzugt ≥ 99 Gew.-%, beträgt, bezogen auf das Gesamtgewicht der Polyolkomponente **K1.**

11. Zweikomponentige Polyurethanzusammensetzung gemäss einem der vorgehenden Ansprüche, **dadurch gekennzeichnet, dass** der Anteil des aromatischen Polyisocyanats **B1** ≥ 90 Gew.-%, insbesondere ≥ 95 Gew.-%, insbesondere bevorzugt ≥ 99 Gew.-%, beträgt, bezogen auf das Gesamtgewicht der Polyisocyanatkomponente **K2.**

12. Verfahren zum Verkleben umfassend die Schritte
- Mischen der Polyolkomponente **(K1)** und der Polyisocyanatkomponente (K2) einer zweikomponentigen Polyurethanzusammensetzung gemäss einem der Ansprüche 1 bis 11,
- Applizieren der gemischten Polyurethanzusammensetzung auf mindestens eine der zu verklebenden Substratoberflächen,
- Fügen innerhalb der Offenzeit
- Aushärten der Polyurethanzusammensetzung.

13. Verfahren zu einem kraftschlüssigen Verfüllen von Fugen und Spalten in einem Substrat umfassend die Schritte
a) Mischen der Polyolkomponente **(K1)** und der Polyisocyanatkomponente **(K2)** einer zweikomponentigen Polyurethanzusammensetzung gemäss einem der Ansprüche 1 bis 11,
b) Applizieren der gemischten Polyurethanzusammensetzung in die zu überbrückende Fuge zwischen zwei Substraten oder in den zu verfüllenden Spalt auf der Oberfläche eines Substrates,
c) Aushärten der Polyurethanzusammensetzung in der Fuge oder im Spalt.

14. Verklebter Artikel, welcher nach einem Verfahren gemäss Anspruch 12 verklebt wurde.

15. Verfüllter Artikel, welcher nach einem Verfahren gemäss Anspruch 13 verfüllt wurde.

## Claims

1. Two-component polyurethane composition consisting of a polyol component **K1** and a polyisocyanate component **K2;**
wherein the polyol component **K1**
comprises at least one reaction product of castor oil with ketone resins
with an OH number of 110 to 200 mg KOH/g **A1,** and
at least one aliphatic triol **A2,** and wherein the polyisocyanate component **K2**
comprises at least one aromatic polyisocyanate **B1,**
wherein the weight percent ratio **(A1/A2)** is 4-50 and wherein the ratio of all the NCO groups of the aromatic polyisocyanates **B1** to all the OH groups in the sum of **(A1+A2)** = 1.15:1-0.85:1,
wherein the aliphatic triol **A2** is
- 1,2,3-propanetriol and/or
- 1,1,1-trimethylolpropane and/or
- polyether polyols based on 1,1,1-trimethylolpropane with a molecular weight of 170-500 g/mol and an OH number of 400-1100 mg KOH/g,
and wherein the total of all the OH groups of **(A1+A2)** is ≥ 90% of the total of all the OH groups of the two-component polyurethane composition.

2. Two-component polyurethane composition according to Claim 1, **characterized in that** the aliphatic triol **A2** is 1,2,3-propanetriol.

3. Two-component polyurethane composition according to Claim 1, **characterized in that** the aliphatic triol **A2** is 1,1,1-trimethylolpropane.

4. Two-component polyurethane composition according to Claim 1, **characterized in that** the aliphatic triol **A2** consists of polyether polyols based on 1,1,1-trimethylolpropane with a molecular weight of 170-500 g/mol and an OH number of 400-1100 mg KOH/g.

5. Two-component polyurethane composition according to any one of the preceding claims, **characterized in that** the weight percent ratio **(A1/A2)** is 35-4, in particular 20-4, particularly preferably 14-4.

6. Two-component polyurethane composition according to any one of Claims 1-4, **characterized in that** the weight percent ratio (**A1**/**A2**) is 50-20, in particular 50-35.

7. Two-component polyurethane composition according to any one of the preceding claims, **characterized in that** the aromatic polyisocyanate **B1** consists of
- MDI, comprising ≥ 40% by weight of monomeric MDI; and/or
- TDI, comprising ≥ 40% by weight of monomeric TDI,
relative to the total weight of the MDI and/or TDI.

8. Two-component polyurethane composition according to any one of the preceding claims, **characterized in that**, in the two-component polyurethane composition, the total of the OH groups that do not originate from **(A1+A2)** is ≤ 5 %, in particular ≤ 2%, particularly preferably ≤ 1%, most preferably ≤ 0.5%, relative to the total of all the OH groups of the two-component polyurethane composition.

9. Two-component polyurethane composition according to any one of the preceding claims, **characterized in that**, in the two-component polyurethane composition, the total of the NCO groups that do not originate from **B1** is ≤ 5%, in particular ≤ 2%, particularly preferably ≤ 1%, most preferably ≤ 0.5%, relative to the total of all the NCO groups of the two-component polyurethane composition.

10. Two-component polyurethane composition according to any one of the preceding claims, **characterized in that** the proportion of the total of **A1** and **A2** is ≥ 90% by weight, in particular ≥ 95% by weight, particularly preferably ≥ 99% by weight, relative to the total weight of the polyol component **K1.**

11. Two-component polyurethane composition according to any one of the preceding claims, **characterized in that** the proportion of the aromatic polyisocyanate **B1** is ≥ 90% by weight, in particular ≥ 95% by weight, particularly preferably ≥ 99% by weight, relative to the total weight of the polyisocyanate component **K2.**

12. Method for bonding, comprising the steps of
- mixing the polyol component **(K1)** and the polyisocyanate component **(K2)** of a two-component polyurethane composition according to any one of Claims 1 to 11,
- applying the mixed polyurethane composition to at least one of the substrate surfaces to be bonded together,
- joining within the open time,
- curing the polyurethane composition.

13. Method for a non-positive filling in of joints and fissures in a substrate, comprising the steps of:
a) mixing the polyol component **(K1)** and the polyisocyanate component **(K2)** of a two-component polyurethane composition according to any one of Claims 1 to 11,
b) applying the mixed polyurethane composition in the joint to be bridged between two substrates or in the fissure to be filled in on the surface of a substrate,
c) curing the polyurethane composition in the joint or in the fissure.

14. Bonded article that was bonded by a method according to Claim 12.

15. Filled-in article that was filled in by a method according to Claim 13.

## Revendications

1. Composition de polyuréthane à deux composants, constituée par un composant polyol K1 et un composant polyisocyanate K2 ; le composant polyol K1 comprenant au moins un produit de transformation d'huile de ricin avec des résines cétoniques présentant un indice OH de 110 à 200 mg de KOH/g A1, et
au moins un triol aliphatique conjugué A2 et
le composant polyisocyanate K2
comprenant au moins un polyisocyanate aromatique B1,
le rapport des % en poids de (A1/A2) valant 4-50 et le rapport de tous les groupes NCO des polyisocyanates aromatiques B1:tous les groupes OH de la somme de (A1+A2) = 1,15:1-0,85:1, le triol aliphatique A2 étant
- le 1,2,3-propanetriol et/ou
- le 1,1,1-triméthylolpropane et/ou
- des polyétherpolyols à base de 1,1,1-triméthylolpropane présentant un poids moléculaire de 170-500 g/mole et un indice OH de 400-1100 mg KOH/g la somme de tous les groupes OH de (A1+A2) étant ≥ 90% de la somme de tous les groupes OH de la composition de polyuréthane à deux composants.

2. Composition de polyuréthane à deux composants selon la revendication 1, **caractérisée en ce qu'**il s'agit, pour le triol aliphatique A2, de 1,2,3-propanetriol.

3. Composition de polyuréthane à deux composants selon la revendication 1, **caractérisée en ce qu'**il s'agit, pour le triol aliphatique A2, de 1,1,1-triméthylolpropane.

4. Composition de polyuréthane à deux composants selon la revendication 1, **caractérisée en ce qu'**il s'agit, pour le triol aliphatique A2, de polyétherpolyols à base de 1,1,1-triméthylolpropane présentant un poids moléculaire de 170-500 g/mole et un indice OH de 400-1100 mg KOH/g.

5. Composition de polyuréthane à deux composants selon l'une quelconque des revendications précédentes, **caractérisée en ce que** le rapport des % en poids de (A1/A2) vaut 35-4, en particulier 20-4, en particulier de préférence 14-4.

6. Composition de polyuréthane à deux composants selon l'une quelconque des revendications 1-4, **caractérisée en ce que** le rapport des % en poids de (A1/A2) vaut 50-20, en particulier 50-35.

7. Composition de polyuréthane à deux composants selon l'une quelconque des revendications précédentes, **caractérisée en ce qu'**il s'agit, pour le polyisocyanate aromatique B1, de
- MDI, qui présente ≥ 40% en poids de MDI monomère ; et/ou
- TDI, qui présente ≥ 40% en poids de TDI monomère, par rapport au poids total du MDI et/ou du TDI.

8. Composition de polyuréthane à deux composants selon l'une quelconque des revendications précédentes, **caractérisée en ce que**, dans la composition de polyuréthane à deux composants, la somme des groupes OH, qui ne proviennent pas de (A1+A2), est ≤ 5%, en particulier ≤ 2%, en particulier de préférence ≤ 1%, le plus préférablement ≤ 0,5%, par rapport à la somme de tous les groupes OH de la composition de polyuréthane à deux composants.

9. Composition de polyuréthane à deux composants selon l'une quelconque des revendications précédentes, **caractérisée en ce que**, dans la composition de polyuréthane à deux composants, la somme des groupes NCO, qui ne proviennent pas de B1, est ≤ 5%, en particulier ≤ 2%, en particulier de préférence ≤ 1%, le plus préférablement ≤ 0,5%, par rapport à la somme de tous les groupes NCO de la composition de polyuréthane à deux composants.

10. Composition de polyuréthane à deux composants selon l'une quelconque des revendications précédentes, **caractérisée en ce que** la proportion de la somme de A1 et A2 est ≥ 90% en poids, en particulier ≥ 95% en poids, en particulier de préférence ≥ 99% en poids, par rapport au poids total du composant polyol K1.

11. Composition de polyuréthane à deux composants selon l'une quelconque des revendications précédentes, **caractérisée en ce que** la proportion de polyisocyanate aromatique B1 est ≥ 90% en poids, en particulier ≥ 95% en poids, en particulier de préférence ≥ 99% en poids, par rapport au poids total du composant polyisocyanate K2.

12. Procédé pour le collage comprenant les étapes consistant à
- mélanger le composant polyol (K1) et le composant polyisocyanate (K2) d'une composition de polyuréthane à deux composants selon l'une quelconque des revendications 1 à 11,
- appliquer la composition de polyuréthane mélangée sur au moins un des substrats à coller,
- assembler pendant le temps ouvert
- laisser durcir la composition de polyuréthane.

13. Procédé pour un remplissage avec liaison de force de joints et de fentes dans un substrat, comprenant les étapes consistant à
a) mélanger le composant polyol (K1) et le composant polyisocyanate (K2) d'une composition de polyuréthane à deux composants selon l'une quelconque des revendications 1 à 11,
b) appliquer la composition de polyuréthane mélangée dans le joint à combler entre deux substrats ou dans la fente à remplir sur la surface d'un substrat,
c) laisser durcir la composition de polyuréthane dans le joint ou la fente.

14. Objet collé, qui a été obtenu selon un procédé selon la revendication 12.

15. Objet rempli, qui a été rempli selon un procédé selon la revendication 13.
